## Europäisches Patentamt

## European Patent Office

## Office européen des brevets

(19)

(11) Veröffentlichungsnummer: **0 019 116**
A1

(12) EUROPÄISCHE PATENTANMELDUNG

(21) Anmeldenummer: 80102223.7

(22) Anmeldetag: 25.04.80

(51) Int. Cl.³: **B 60 P 1/02**
B 64 F 1/32, B 62 D 21/18

(30) Priorität: 15.05.79 DE 2919497

(43) Veröffentlichungstag der Anmeldung:
26.11.80 Patentblatt 80/24

(84) Benannte Vertragsstaaten:
AT BE CH DE FR GB IT LI LU NL SE

(71) Anmelder: Trepel AG
Alte Schmelze 18-22 Trepelhaus
D-6200 Wiesbaden-Schierstein(DE)

(72) Erfinder: Heinz, Dieter
Schwarzwaldstrasse 3
D-6204 Taunusstein 2(DE)

(72) Erfinder: Richter, Peter
Black & Decker-Strasse 18
D-6270 Idstein(DE)

(74) Vertreter: Röbe-Oltmanns, Georg, Dr.
Dotzheimer Strasse 61
D-6200 Wiesbaden(DE)

(54) Versorgungsfahrzeug mit hydraulisch abhebbarer Nutzlastkabine insbesondere für den Flughafenbetrieb.

(57) Zum Transport von Gütern auf Flughäfen vom Lagerplatz zum Flugzeug und umgekehrt, werden im allgemeinen Fahrzeuge benutzt mit einem Chassis, einem vor den Vorderrädern auf dem Chassis angeordneten Fahrerhaus und einer hinter dem Fahrerhaus angeordneten mittels Hubscheren hydraulisch heb- und senkbaren Nutzlastkabine, die an ihrer dem Fahrerhaus zugewandten Stirnseite mit einer Überladebrücke versehen ist, die ihrerseits an der Stirnseite der Nutzlastkabine auf- und abbewegbar ist, um bei angehobener Nutzlastkabine eine Stellung einzunehmen, in der sie höhengleich mit dem Boden der Kabine befindet und um bei abgesenkter Nutzlastkabine eine Stellung einzunehmen, in der sie sich unmittelbar oberhalb des Fahrerhauses befindet.

Bei den bekannten Fahrzeugen dieser Art ist das Fahrerhaus in der Waagerechten zweiteilig ausgebildet und mit einem nach unten verschiebbaren Oberteil versehen.

Um das zweiteilige Fahrerhaus mit einem nach unten verschiebbaren Oberteil zu vermeiden, wird erfindungsgemäß vorgeschlagen, das Chassis (1) vor den Vorderachsen nach unten abgekröpft (bei 14) auszubilden, so daß die das Fahrerhaus (13) tragende Verlängerung (15) des Chassis (1) unterhalb der Oberkante der Vorderräder (3) liegt.

./...

Die Erfindung betrifft ein Versorgungsfahrzeug, insbesondere für den Flughafenbetrieb, mit einem Fahrzeugchassis mit Fahrwerk, einem vor den Vorderrädern auf dem Fahrzeugchassis angeordneten Fahrerhaus und einer hinter dem Fahrerhaus angeordneten und mittels auf dem Fahrzeugchassis angebrachte Hubscheren hydraulisch anhebbaren und absenkbaren Nutzlastkabine, die zum Zweck des Andockens an eine zu bedienende, hochgelegene Ladeöffnung, beispielsweise eines Flugzeuges, an ihrer dem Fahrerhaus zugewandten Stirnseite mit einer Überladebrücke versehen ist, die ihrerseits an der Stirnseite der Nutzlastkabine auf- und abbewegbar ist, um bei angehobener Nutzlastkabine eine Stellung einzunehmen, in der sie höhengleich mit dem Boden der Kabine ist, und um bei abgesenkter Nutzlastkabine eine angehobene Stellung einzunehmen, in der sie sich unmittelbar oberhalb des Fahrerhauses befindet.

Als Trägerfahrzeuge für die mittels Hubscheren hydraulisch anhebbaren Koffer oder Nutzlastkabinen wurden bisher im allgemeinen handelsübliche Lastkraftfahrzeuge verwendet. Das Beladen bzw. Beschicken des Fahrzeuges mit in ein Flugzeug zu verbringenden Gegenständen erfolgt im allgemeinen über das Hinterende der Nutzlastkabine vom Boden oder von einer üblichen Hallenrampe aus. Dafür ist es erforderlich, daß die Nutzlastkabine soweit wie möglich auf das Fahrzeugchassis abgesenkt werden kann. Aus diesem Grunde endet sie mit ihrer vorderen Stirnseite hinter dem Fahrerhaus, damit sich die Kabine über die Oberseite des Fahrerhauses hinaus nach unten auf das Fahrzeugchassis absenken läßt.

Das Andocken der angehobenen Nutzlastkabine an eine hochgelegene Flugzeugöffnung erfolgt jedoch mit deren dem Fahrerhaus zugewandten vorderen Stirnseite. Da jedoch der Andockvorgang vom Fahrerhaus aus beobachtbar sein soll und in vielen Fällen die Abmessungen der abgestellten Flugzeuge nicht so sind, daß das Fahrzeug mit dem Fahrerhaus unter das Flugzeug fahren kann, ist zur Überbrückung des Abstandes zwischen der vorderen Stirnseite der Nutzlastkabine und der eigentlichen Andockstelle, die sich im allgemeinen kurz vor der Vorderseite des Fahrerhauses befindet, eine Überladebrücke erforderlich, die bei bekannten Fahrzeugen an der Stirnseite der Nutzlastkabine angebracht ist.

Damit diese Überladebrücke beim Absenken der Nutzlastkabine auf das Fahrzeugchassis nicht mit dem Fahrerhaus in Kollision gerät, ist sie ihrerseits an der Stirnseite der Nutzlastkabine auf und abbewegbar. Vor dem Absenken der Nutzlastkabine auf das Fahrzeugchassis muß die Überladebrücke an der Kabine in eine solche Stellung nach oben gefahren werden, daß sie sich bei voll abgesenktem Zustand der Nutzlastkabine oberhalb des Fahrerhauses befindet. Bei angehobener Nutzlastkabine wird die Überladebrücke dann soweit an der Kabine abgesenkt, daß sich ihre Brückenebene auf gleicher Höhe mit dem Boden der Nutzlastkabine befindet.

Es ist leicht einzusehen, daß die Überladebrücke erst dann in diese Stellung nach unten gefahren werden kann, wenn sich die Nutzlastkabine mit ihrem Boden oberhalb der Oberseite des Fahrerhauses befindet. Ladeöffnungen, die eine geringere Höhe besitzen als die so festgelegte Mindesthöhe für das Andocken des Fahrzeuges können von dem Fahrzeug nicht bedient werden. Nun weisen aber gerade Mittelstreckenflugzeuge Lade-

3

Öffnungen auf, deren Unterkante sich noch unterhalb der Oberseite des Fahrerhauses eines handelsüblichen Lastkraftwagens befindet, wie als Trägerfahrzeug für die eingangs genannten Versorgungsfahrzeuge allgemein verwendet wird.

Der Erfindung liegt daher die Aufgabe zugrunde, ein Fahrzeug der eingangs genannten Art so zu gestalten, daß ein Andockvorgang mittels der Überladebrücke auf eine Höhe stattfinden kann, die um einen gewissen Betrag unterhalb der Oberseite des Fahrerhauses eines handelsüblichen Lastkraftwagens befindet.

Diese Aufgabe wird erfindungsgemäß dadurch gelöst, daß das Fahrzeugchassis vor den Vorderrädern nach unten abgekröpft ist und die das Fahrerhaus tragende Verlängerung des Fahrzeugchassis unterhalb der Oberseite der Vorderräder verläuft.

Die Verlängerung des Fahrzeugchassis bzw. die Unterseite des Fahrerhauses werden dabei zweckmäßigerweise so tief gelegt, daß die Bodenfreiheit des Fahrzeuges unterhalb des Fahrerhauses nicht größer ist als erforderlich, d.h. die Bodenfreiheit beträgt nicht mehr als die Bodenfreiheit der Fahrzeugachsen.

Auf diese Weise läßt sich das Fahrerhaus eines Lastkraftwagens um ein erhebliches Stück tiefer legen, so daß um einen gleichen Betrag tiefer liegende Ladeöffnungen eines Flugzeuges bedient werden können, als dies mit bereits bekannten Versorgungsfahrzeugen der bezeichneten Art der Fall war. Die Lage der höchsten bedienbaren Ladeöffnungen wird durch diese Maßnahme nicht beeinflußt und bleibt nach wie vor allein von der Hubhöhe der Hubscheren über dem Chassis abhängig. Die erfindungsgemäße Maßnahme bietet ferner den Vorteil, daß die gesamte

4

Anordnung und Ausführung der hydraulisch anhebbaren Nutzlastkabine unverändert bleiben kann.

Anhand der einzigen beigefügten Zeichnung wird die Erfindung noch verdeutlicht.

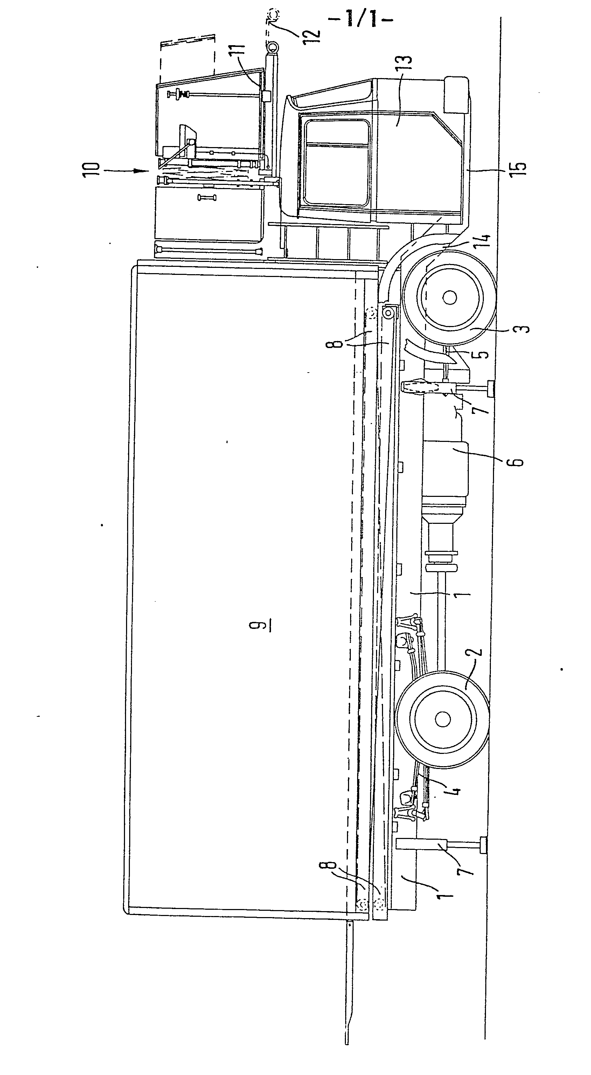

Das in der Zeichnung dargestellte Versorgungsfahrzeug besitzt ein Fahrzeugchassis 1 mit einem Fahrwerk, bestehend aus Hinterrädern 2, Vorderrädern 3, einer Hinterradfederung 4, einer Vorderradfederung 5 sowie einer Antriebseinheit 6. Seitlich am Fahrzeug sind noch absenkbare Bodenstützen 7 vorgesehen, die zur Stabilisierung des Fahrzeuges bei angehobener Nutzlastkabine dienen.

Auf dem Fahrzeugchassis sind hydraulisch anhebbare Hubscheren 8 angebracht, die in der zeichnerischen Darstellung im voll zusammengefalteten Zustand gezeigt sind, und auf denen ein Koffer oder eine Nutzlastkabine 9 ruht. An der vorderen Stirnseite der Nutzlastkabine 9 ist eine Überladebrücke lo angebracht, die an der Nutzlastkabine auf- und abbewegbar ist. Die Überladebrücke ist zweiteilig ausgeführt und besitzt ein Vorderteil 11, das einerseits zur genauen seitlichen Positionierung beim Andocken in Querrichtung der Nutzlastkabine verfahrbar und andererseits auch noch um eine gewisse Länge ausfahrbar ist, wie dies in gestrichelter Darstellung bei 12 angedeutet ist.

In der Darstellung der Zeichnung, in der die Nutzlastkabine 9 im abgesenktem Zustand gezeigt ist, ist die Überladebrücke lo an der Kabine nach oben gefahren, um Raum für das Fahrerhaus 13 freizumachen. Wird die Nutzlastkabine 9 soweit nach oben bewegt, daß sich ihre Unterseite oberhalb des Fahrerhauses 13 befindet, kann die Überladebrücke lo bis in ihre unterste Stellung abwärts bewegt werden, in der sie mit dem Boden der Nutzlastkabine 9 bündig ist.

Aus der Zeichnung ist ferner zu erkennen, daß das Fahrzeugchassis 1 vor den Vorderrädern 3 an der Stelle 14 nach unten abgekröpft ist, so daß sich seine vordere Verlängerung 15 auf einem tieferen Niveau befindet als der Rest des Chassis und die Bodenfreiheit der Verlängerung 15 in etwa die gleiche ist, wie diejenige der Fahrzeugachsen.

Durch diese Maßnahme braucht die Nutzlastkabine nur etwa um die halbe Höhe des Fahrerhauses angehoben zu werden, um die Überladebrücke lo in ihre unterste Stellung zu verfahren, in der sie sich höhengleich mit dem Boden der Kabine befindet. Auf diese Weise lassen sich mit dem Versorgungsfahrzeug auch hochgelegene Ladeöffnungen bedienen, die niedriger liegen als Öffnungen, die mit entsprechenden Fahrzeugen herkömmlicher Art bedient werden konnten. Hierdurch wird der mögliche Aktionsspielraum der Fahrzeuge wesentlich erweitert und zwar gerade in einem Bereich, wie er für die gleichzeitige Bedienung von Langstrecken- und Mittelstreckenflugzeugen erfordert wird.

Flugzeuge weisen unterschiedliche Bauhöhen auf. Mit Versorgungsfahrzeugen der genannten Art ist es vielfach nicht möglich, Flugzeuge sehr niedriger Bauhöhe zu be- bzw. entladen usw., weil durch die Höhe des Fahrerhauses 13 bedingt, die Überladebrücke lo nicht so tief nach unten gefahren werden kann, daß ein glatter Übergang vom Boden des Flugzeuges auf die Überladebrücke lo und umgekehrt möglich ist.

Aus diesem Grunde wird erfindungemäß vorgeschlagen, die Chassisverlängerung 15, die das Fahrerhaus 13 trägt, so tief nach unten zu legen, daß die Bodenfreiheit etwa der zulässigen Mindestbodenfreiheit von auf Flughäfen zugelassenen Versorgungsfahrzeugen entspricht. Sollte auch bei dieser Ausführungsform die Oberkante des Fahrerhauses noch so hoch liegen, daß die Überladebrücke nicht bis auf die niedrigste Ladehöhe niedrig gebauter Flugzeuge abgesenkt werden kann, wird darüberhinaus vorgeschlagen, die Oberkante des Fahrerhauses 13 so tief anzuordnen, daß sie bei der erforderlichen niedrigsten Ladestellung der Überladebrücke noch unterhalb der Überladebrücke 1o liegt. Bei einer solchen Gestaltung ist die innere Höhe des Fahrerhauses 13 für den Fahrer ausreichend und gestattet ihm auch noch ein glattes Ein- und Aussteigen.

Bei dieser zuletzt genannten Gestaltung des Versorgungsfahrzeuges ist es nicht erforderlich, das Fahrerhaus in der Waagerechten zweiteilig mit einem nach unten verschiebbaren Oberteil auszubilden. Bei der erfindungsgemäßen Gestaltung muß der Fahrer das Fahrerhaus nicht verlassen, wenn Flugzeuge niedriger Bauhöhe be- bzw. entladen werden sollen und muß der Fahrer desweiteren auch nicht hochklettern, um auf den Fahrersitz zu gelangen bzw. umgekehrt. Die Bauhöhe des erfindungsgemäßen Fahrzeuges kann relativ niedrig gehalten werden, so daß bei abgesenkter Nutzlastkabine 9 und abgesenkter Überladebrücke 1o auch Durchgänge mit relativ geringer Höhe ohne Schwierigkeiten durchfahren werden können.

1

P a t e n t a n s p r ü c h e

1. Versorgungsfahrzeuge, insbesondere für den Flughafenbetrieb, mit einem Fahrzeugchassis mit Fahrwerk, einem vor den Vorderrädern auf dem Fahrzeugchassis angeordneten Fahrerhaus und einer hinter dem Fahrerhaus angeordneten und mittels auf dem Fahrzeugchassis angebrachten Hubscheren hydraulisch anhebbaren und absenkbaren Nutzlastkabine, die zum Zweck des Andockens an eine zu bedienende, hochgelegene Ladeöffnung, beispielsweise eines Flugzeuges, an ihrer dem Fahrerhaus zugewandten Stirnseite mit einer Überladebrücke versehen ist, die ihrerseits an der Stirnseite der Nutzlastkabine auf und abbewegbar ist, um bei angehobener Nutzlastkabine eine Stellung einzunehmen, in der sie höhengleich mit dem Boden der Kabine ist, und um bei abgesenkter Nutzlastkabine eine angehobene Stellung einzunehmen, in der sie sich unmittelbar oberhalb des Fahrerhauses befindet, dadurch gekennzeichnet, daß das Fahrzeugchassis (1) vor den Vorderachsen nach unten abgekröpft (bei 14) und die das Fahrerhaus (13) tragende Verlängerung (15) des Fahrzeugchassis (1) unterhalb der Oberseite der Vorderräder (3) verläuft.

2. Versorgungsfahrzeug nach Anspruch 1, dadurch gekennzeichnet, daß die Bodenfreiheit der das Fahrerhaus (13) tragenden Chassisverlängerung (15) in etwa der Bodenfreiheit der Fahrzeugachsen entspricht.

3. Versorgungsfahrzeug nach Anspruch 1, dadurch gekennzeichnet, daß die Bodenfreiheit der das Fahrerhaus (13) tragenden Chassisverlängerung (15) etwa der zulässigen Mindest- Bodenfreiheit von auf Flughäfen zugelassenen Versorgungsfahrzeugen entspricht.

0019116

2

4. Versorgungsfahrzeug nach Anspruch 1 und/oder und/oder 3, dadurch gekennzeichnet, daß die Oberkante des Fahrerhauses (13) bei der niedrigsten Ladestellung der Überladebrücke (lo) unterhalb der Überladebrücke (lo) liegt.

10

11

12

9

8

8

13

7

4

2

1

1

6

7

5

3

14

15

-1/1-

0019116

Europäisches
Patentamt

**EUROPÄISCHER RECHERCHENBERICHT**

Nummer der Anmeldung

EP 80 10 2223

## EINSCHLÄGIGE DOKUMENTE

| Kategorie | Kennzeichnung des Dokuments mit Angabe, soweit erforderlich, der maßgeblichen Teile | betrifft Anspruch |
|---|---|---|
| | US - A - 3 524 563 (McCARTNEY) <br> * Spalte 3, Zeile 63 bis Spalte 4, Zeile 53; Figuren 1,2 * <br><br> -- <br><br> CH - A - 374 292 (CARROSSERIE-WERKE AARBURG AG) <br> * Figur 1 * <br><br> -- <br><br> DE - A - 1 531 547 (TREPEL KG) <br> * Figuren 1,2 * <br><br> ---- | 1,2 <br><br><br><br> 1 <br><br><br><br> 1 |

**KLASSIFIKATION DER ANMELDUNG (Int.Cl. 3)**

B 60 P 1/02
B 64 F 1/32
B 62 D 21/18

**RECHERCHIERTE SACHGEBIETE (Int. Cl. 3)**

B 60 P
B 64 F
B 62 D

**KATEGORIE DER GENANNTEN DOKUMENTE**

X: von besonderer Bedeutung
A: technologischer Hintergrund
O: nichtschriftliche Offenbarung
P: Zwischenliteratur
T: der Erfindung zugrunde liegende Theorien oder Grundsätze
E: kollidierende Anmeldung
D: in der Anmeldung angeführtes Dokument
L: aus andern Gründen angeführtes Dokument
&: Mitglied der gleichen Patentfamilie, übereinstimmendes Dokument

Der vorliegende Recherchenbericht wurde für alle Patentansprüche erstellt.

| Recherchenort | Abschlußdatum der Recherche | Prüfer |
|---|---|---|
| Den Haag | 14-08-1980 | PETERS |

EPA form 1503.1 06.78